# EUROPÄISCHE PATENTSCHRIFT

(11) **EP 2 365 196 B1**
(45) Veröffentlichungstag und Bekanntmachung des Hinweises auf die Patenterteilung: **19.10.2016**
(21) Anmeldenummer: 11156926.5
(22) Anmeldetag: 04.03.2011
(51) Int. Cl.: F02M 26/00

(54) **MTC-Ventil**
MTC valve
Soupape MTC

(30) Priorität: 08.03.2010 DE 102010002643
(43) Veröffentlichungstag der Anmeldung: 14.09.2011
(73) Patentinhaber: MAHLE Behr GmbH & Co. KG, 70469 Stuttgart (DE); MAHLE Behr Kornwestheim GmbH, 70806 Kornwestheim (DE)
(72) Erfinder: Müller, Rolf, 71711 Steinheim (DE); Willers, Eike, 70469 Stuttgart (DE)
(74) Vertreter: Grauel, Andreas

(56) Entgegenhaltungen:
- FR-A1- 2 891 590
- FR-A1- 2 933 146
- US-A1- 2006 236 693
- US-A1- 2009 283 076

## Beschreibung

Die Erfindung betrifft ein MTC-Ventil gemäß dem Oberbegriff des Anspruches 1, eine Anordnung zur Rückführung von Abgas eines Verbrennungsmotors gemäß dem Oberbegriff des Anspruches 7 und einen Verbrennungsmotor gemäß dem Oberbegriff des Anspruches 8.

Die zunehmend strengeren Bestimmungen für die zulässigen Abgasgrenzwerte von Verbrennungsmotoren in Kraftfahrzeugen erfordern einen großen technischen Aufwand. Insbesondere bei Dieselmotoren ist eine Reduzierung der Stickoxide im Abgas mittels einer Abgasrückführung möglich. Dabei wird bei einer Hochdruck-Abgasrückführung durch eine Hochdruck-Abgasrückführleitung Abgas aus einer Höchdruck-Abgasleitung entnommen und einer Hochdruck-Ladeluftleitung zugeführt. Dadurch kann das Abgas aus dem Verbrennungsmotor der Ladeluft vor der Zuführung in den Verbrennungsmotor und nach dem Durchleiten durch einen Ladeluftwärmeü-bertrager zugeführt werden. Der Ladeluftwärmeübertrager ist dabei in die Hochdruck-Ladeluftleitung eingebaut. Zur Steuerung der durch die Hochdruck-Abgasrückführleitung leitbaren Menge an Hochdruck-Abgas pro Zeit-einheit ist in diese ein erstes Abgassteuerorgan eingebaut.

Bei einer Niederdruck-Abgasrückführleitung wird aus einer Niederdruck-Abgasleitung in Strömungsrichtung des Abgases nach einer Abgasturbine Abgas durch eine Niederdruck-Abgasrückführleitung entnommen und anschließend einer in einen Ladeluftverdichter führenden Niederdruck-Ladeluftleitung zugeführt. Zur Steuerung der durch die Niederdruck-Abgasrückführleitung leitbaren Menge an Niederdruck-Abgas pro Zeiteinheit ist auch in die Niederdruck-Abgasrückführieitung ein zweites Abgassteuerorgan eingebaut.

In nachteiliger Weise wird damit bei dem Verbrennungsmotor mit der Anordnung zur Rückführung von Abgas sowohl für Hochdruck-Abgas als auch für Niederdruck-Abgas ein erstes und ein zweites Abgassteuerorgan, als 2-Wege-Ventile ausgeführt, benötigt. Damit sind in nachteiliger Weise in der Anordnung zur Rückführung von Abgas zwei separate 2-Wege-Ventile jeweils mit einem Aktuator zum Bewegen eines Ventilkörpers des ersten und zweiten Abgassteuerorgans erforderlich. Dies ist mit einem zusätzlichen technischen Aufwand und damit höheren Kosten verbunden. Die beiden 2-Wege-Ventile als erstes und zweites Abgassteuerorgan müssen dabei separat an das Bordnetz des Kraftfahrzeuges angeschlossen werden. Dies erfordert einen zusätzlichen Montageaufwand neben dem Aufwand zur Herstellung von zwei separaten 2-Wege-Ventilen als erstes und zweites Abgassteuerorgan.

Aus US 2006 023 66 93 A1 und FR 2 933 146 A1 sind zwei solche Anordungen bekannt.

Die Aufgabe der vorliegenden Erfindung besteht deshalb darin, ein MTC-Ventil, eine Anordnung zur Rückführung von Abgas eines Verbrennungsmotors und einen Verbrennungsmotor zur Verfügung zu stellen, der einfach und kostengünstig in der Herstellung ist und eine Steuerung der durch eine Hochdruck-Abgasrückführleitung und eine Niederdruck-Abgasrückführleitung leitbaren Menge an Abgas ermöglicht.

Diese Aufgabe wird gelöst mit einem MTC-Ventil zur Rückführung von Abgas eines Verbrennungsmotors, umfassend ein Gehäuse, wenigstens einen Ventilkörper, eine Hochdruck-Einlassöffnung für Hochdruck-Abgas, eine Hochdruck-Auslassöffnung für Hochdruck-Abgas, einen ersten Strömungskanal für Hochdruck-Abgas, der die Hochdruck-Einlassöffnung mit der Hochdruck-Auslassöffnung fluidleitend verbindet, wobei mittels einer Bewegung des wenigstens einen Ventilkörpers die Strömungsquerschnittsfläche des ersten Strömungskanales für das Hochdruck-Abgas veränderbar ist, wobei das MTC-Ventil eine Niederdruck-Einlassöffnung für Niederdruck-Abgas, eine Niederdruck-Auslassöffnung für Niederdruck-Abgas und einen zweiten Strömungskanal für Niederdruck-Abgas, der die Niederdruck-Einlassöffnung mit der Niederdruck-Auslassöffnung fluidleitend verbindet, wobei mittels einer Bewegung des wenigstens einen Ventilkörpers die Strömungsquerschnittsfläche des zweiten Strömungskanales für das Niederdruck-Abgas veränderbar ist.

Das MTC-Ventil (mass and temperature control valve) kann damit die beiden separaten 2-Wege-Ventile als erstes und zweites Abgassteuerorgän ersetzen. Damit wird nur noch ein Ventil zur Steuerung des durch eine Hochdruck-Abgasrückführleitung geleiteten Hochdruck-Abgases und eine durch eine Niederdruck-Abgasrückführleitung geleiteten Niederdruck-Abgases benötigt. Damit können der technische Aufwand und die Kosten reduziert werden, weil nur noch ein Ventil zur Steuerung des Hochdruck-Abgases und des Niederdruck-Abgases erforderlich ist.

Insbesondere ist mittels einer Bewegung des wenigstens einen Ventilkörpers der erste und/oder zweite Strömungskanal für das Hochdruck-Abgas und/oder das Niederdruck-Abgas verschließbar. Mittels des wenisgstens ei nen Ventilkörpers kann somit der erste und/oder der zweite Strömungskanal für das Hochdruck-Abgas und/oder das Niederdruck-Abgas vollständig verschlossen werden bzw. ist vollständig verschließbar, so dass dadurch entweder nur durch die Hochdruck-Abgasrückführleitung Hochdruck-Abgas, strömt oder nur die Niederdruck-Abgasrückführleitung Niederdruck-Abgas strömt bei einer Anordnung des MTC-Ventils in einer Anordnung zur Rück-führung von Abgas des Verbrennungsmotors.

Erfindungemäß ist der ventilkörper ein Kolben, der in einer Kolbenführung, beispielsweise einem Zylinder, vorzugsweise an dem Gehäuse, gelagert ist für eine, insbesondere ausschließliche, Translationsbewegung des Kolbens.

Zweckmäßig ist die Kolbenführung ein gesondertes Bauteil, welches an dem Gehäuse befestigt ist oder die Kolbenführung ist unmittelbar an dem Gehäuse ausgebildet.

In einer ergänzenden Ausgestaltung ist der wenigstens eine Ventilkörper mittels einer Gleitlagerung gelagert.

In einer ergänzenden Ausführungsform weist das MTC-ventil nur einen Ventilkörper auf. Das MTC-Ventil weist somit nur einen Ventilkörper, insbesondere nur einen Kolben auf. Damit ist der technische Aufbau des MTC-Ventils besonders einfach, weil nur der eine Ventilkörper von einem Aktuator zu bewegen ist und dadurch kein aufwendiger Mechanismus zur Bewegung des Ventilkörpers erforderlich ist.

Mittels des nur einen Ventilkörpers die Strömungsquerschnittsfläche ist des ersten als auch des zweiten Strömungskanales sowohl für das Hochdruck-Abgas als auch für das Niederdruck-Abgas veränderbar. Mit dem nur einen Ventilkörper kann somit die Strömungsquerschnittsfläche des ersten als auch des zweiten Strömungskanales verändert bzw gesteuert werden. Damit kann die Menge an Abgas, welche durch den ersten oder den zweigen Strömungskanal strömt gesteuert und/oder geregelt werden.

Erfindungsgemäß ist in einer ersten Stellung des wenigstens einen Ventilkörpers der erste Strömungskanal für Hochdruck-Abgas verschlossen und der zweite Strömungskanal ist für Niederdruck-Abgas geöffnet.

Zweckmäßig ist in einer zweiten Stellung des wenigstens einen Ventilkörpers der erste Strömungskanal für Hochdruck-Abgas geöffnet und der zweite Strömungskanal ist für Niederdruck-Abgas verschlossen.

Erfindungsgemäß ist in einer dritten Stellung des wenigtens einen Ventilkörpers der erste Strömungskanal für Hochdruck-Abgas geöffnet und der zweite Strömungskanal für Niederdruck-Abgas geöffnet, Durch das MTC-Ventil kann somit sowohl durch den ersten Strömungskanal als auch durch den zweiten Strömungskanal Abgas geleitet werden, so dass mittels des MTC-Ventils auch Betriebszustände angesteuert werden können, bei denen sowohl durch die Hochdruck-Abgasrückführleitung Hochdruck-Abgas strömt als auch durch die Niederdruck-Abgasrückführleitung Niederdruck-Abgas strömt, wobei dies gleichzeltig erfolgt.

Insbesondere liegt die dritte Stellung des wenigstens einen Ventilkörpers zwischen der ersten und zweiten Stellung des wenigstens einen Ventilkörpers und/oder der wenigstens eine Ventilkörper weist eine Aussparung, insbesondere eine Ringnut, auf, so dass in der dritten Stellung das Hochdruck-Abgas oder das Niederdruck-Abgas durch die Aussparung leitbar ist.

In einer weiteren Ausgestaltung weist der wenigstens eine Ventilkörper eine Bohrung auf, durch die in der dritten Stellung des wenigstens einen Ventilkörpers Hochdruck-Abgas oder Niederdruck-Abgas leitbar ist. Beispielsweise kann in der dritten Stellung des wenigstens einen Ventilkörpers das Niederdruck-Abgas durch den zweiten Strömungskanal strömen und das Hochdruck-Abgas durch die Aussparung oder die Bohrung in dem Ventilkörper, so dass dadurch auch der erste Strömungskanal für das Hochdruck-Abgas geöffnet ist, weil das Hochdruck-Abgas durch die Aussparung oder die Bohrung in den Ventilkörper strömt oder umgekehrt.

Insbesondere weist der Kolben einen unterschiedlichen Durchmesser auf, insbesondere weist der Kolben an dem zweiten Strömungskanal für Niederdruck-Abgas einen größeren Durchmesser auf als an dem ersten Strömungskanal für Hochdruck-Abgas.

In eine ergänzenden Variante ist die, insbesondere minimale, Strömungsquerschnittsfläche des zweiten Strömungskanales für Niederdruck-Abgas größer, vorzugsweise um wenigstens 10 %, 20 %, 30 % oder 50 % größer, als die, insbesondere minimale. Strömungsquerschnittsfläche des ersten Strömungskanales für Hochdruck-Abgas. Aufgrund des größeren Druckes des Hochdruck-Abgases und/oder einer größeren Druckdifferenz zwischen der Entnahme des Hochdruck-Abgases an der Hochdruck-Abgasleitung und der Zuführung des Hochdruck-Abgases in die Hochdruck-Ladeluftleitung in Strömungsrichtung der Ladeluft nach dem Ladeluftwärmeübertrager und vor dem Verbrennungsmotor ist für den ersten Strömungskanal die kleinere, insbesondere minimale, Strömungsquerschnittsfläche ausreichend zum Durchleiten des Hochdruck-Abgases.

In einer weiteren Variante ist innerhalb des wenigstens eines Ventilkörpers, insbesondere dem Kolben, eine Schubstange angeordnet und mittels der Schubstange ist der wenigstens eine Ventilkörper bewegbar und/oder das MTC-Ventil weist einen, insbesondere nur einen, Aktuator, z. B. einen Elektromotor oder ein Piezoelement, auf, zum Bewegen des wenigstens einen Ventilkörpers. Das MTC-Ventil weist somit nur einen Aktuator auf, so dass dieses in der Herstellung einfach ist, weil nur ein Aktuator zur Steuerung des Durchflusses sowohl in der Hochdruck-Abgasrückführleitung als auch in der Niederdruck-Abgasrückführleitung erforderlich ist, bei einer Anordnung des MTC-Ventils in der Anordnung zur Rückführung von Abgas des Verbrennungsmotors.

In einer weiteren Ausgestaltung ist das MTC-Ventil als eine einzige Baueinheit ausgebildet.

In einer ergänzenden Ausgestaltung weist das MTC-Ventil eine, insbesondere nur eine, elektrische Steckverbindereinheit auf zum Anschließen eines elektrischen Bordnetzes eines Kraftfahrzeuges.

In einer zusätzlichen Ausgestaltung ist das Gehäuse des MTC-Ventils einoder mehrteilig.

In einer ergänzenden Variante bestehen die Komponenten des MTG-Ventils, insbesondere das Gehäuse und/oder der wenigstens eine Veritilkörper und/oder die Gleitlagerung und/oder die Kolbenführung und/oder ein Dichtring aus Metall, z. B. Stahl oder Aluminium, oder Kunststoff.

Erfindungsgemäße Anordnung zur Rückführung und vorzugsweise Kühlung von Abgas eines Verbrennungsmotors, insbesondere eines Dieselmotors, umfassend eine Hochdruck-Abgasleitung, eine in Strömungsrichtung des Abgases nach der Hochdruck-Abgasleitung angeordnete Abgasturbine, eine in Strömungsrichtung des Abgases nach der Abgasturbine angeordnete Niederdruck-Abgasleitung, einen Ladeluftverdichter, insbesondere eine Ladeluftturbine, vorzugsweise antreibbar von der Abgasturbine, eine in Strömungsrichtung der Ladeluft nach dem Ladeluftverdichter angeordnete Hochdruck-Ladeluftleitung, eine in Strömungsrichtung der Ladeluft vor dem Ladeluftverdichter angeordnete Niederdruck-Ladeluftleitung, eine HochdruckAbgasrückführleitung zur Leitung von Hochdruck-Abgas von der HochdruckAbgasleitung zu der Hochdruck-Ladeluftleitung, eine NiederdruckAbgasrückführleitung zur Leitung von Niederdruck-Abgas von der Niederdruck-Abgasleitung zu der Niederdruck-Ladeluftleitung, vorzugsweise einen Ladeluftwärmeübertrager zur Kühlung von Ladeluft in der HochdruckLadeluftleitung in Strömungsrichtung der Luft nach dem Ladeluftverdichter, vorzugsweise einen Abgaswärmeübertrager zur Kühlung von Niederdruck-Abgas in der Niederdruck-Abgasleitung, ein erstes Abgassteuerorgan zur Steuerung und/oder Regelung der durch die HochdruckAbgasrückführleitung leitbaren Menge an Hochdruck-Abgas pro Zeiteinheit, ein zweites Abgassteuerorgan zur Steuerung und/oder Regelung der durch die Niederdruck-Abgasrückführleitung leitbaren Menge an Niederdruck-Abgas pro Zeiteinheit, wobei das erste und zweite Abgassteuerorgan als nur ein in dieser Schutzrechtsanmeldung beschriebenes MTC-Ventil sind.

In einer ergänzenden Ausgestaltung ist das nur eine MTC-Ventil in Strömungsrichtung des Niederdruck-Abgases an der Niederdruck-Abgasrückführlieitung vor einem Abgaswärmeübertrager oder nach dem Abgaswärmeübertrager angeordnet.

Vorzugsweise ist in oder an die Hochdruck-Abgasrückführleitung kein Abgaswärmeübertrager eingebaut oder angeordnet.

Erfindungsgemäßer Verbrennungsmotor, vorzugsweise Hubkolbenverbrennungskräftmaschine, insbesondere Dieselmotor, für ein Kraftfahrzeug mit einer Anordnung zur Rückführung und vorzugsweise Kühlung von Abgas des Verbrennungsmotors, wobei die Anordnung als eine in dieser Schutzrechtsanmeldung beschriebene Anordnung ausgebildet ist.

In einer weiteren Ausgestaltung mündet die Hochdruck-Abgasrückführleitung in Strömungsrichtung der Ladeluft nach dem Ladeluftwärmeübertrager und vor dem Verbrennungsmotor in die Hochdruck-Ladeluftleitung.

Im Nachfolgenden werden Ausführungsbeispiele der Erfindung unter Bezugnahme auf die beigefügten Zeichnungen näher beschrieben. Es zeigt:
- Fig. 1: eine vereinfachte Darstellung einer aus dem Stand der Technik bekannten Anordnung zur Rückführung von Abgas eines Verbrennungsmotors,
- Fig. 2: eine vereinfachte Darstellung einer erfindungsgemäßen Anordnung zur Rückführung von Abgas eines Verbrennungsmotors,
- Fig. 3: einen Längsschnitt eines MTC-Ventils in einem ersten Ausführungsbeispiel in einer ersten Stellung eines Ventilkörpers,
- Fig. 4: einen Längsschnitt des MTC-Ventils gemäß Fig. 3 in einer zweiten Stellung des Ventilkörpers und
- Fig. 5: einen Längsschnitt des MTC-Ventils in einem zweiten Ausführungsbeispiel in einer dritten Stellung des Ventilkörpers.

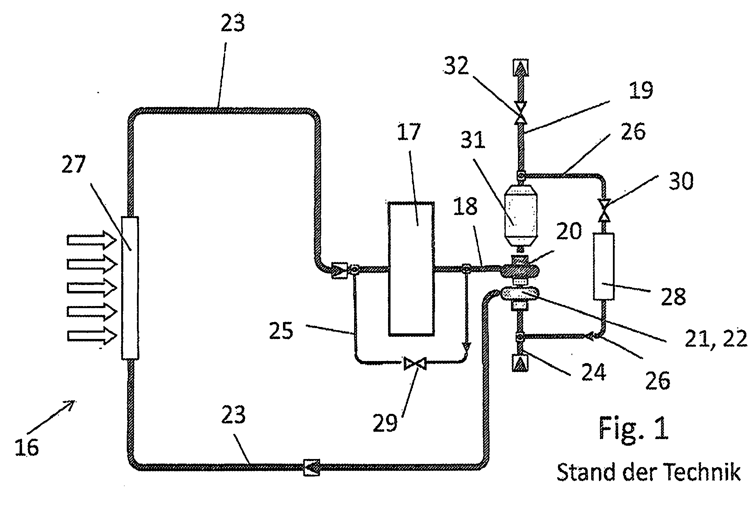

In Fig. 1 ist eine aus dem Stand der Technik bekannte Anordnung 16 zur Rückführung und Kühlung von Abgas eines Verbrennungsmotors 17 dargestellt. Dem Verbrennungsmotor 17 wird durch eine Hochdruck-Ladeluftleitung 23 Hochdruck-Ladeluft zugeführt zur Verbrennung von Brennstoff in einem nicht dargestellten Verbrennungsraum des Verbrennungsmotors 17, insbesondere als Dieselmotor ausgebildet. Nach der Verbrennung in dem Verbrennungsmotor 17 strömt aus dem Verbrennungsmotor 17 HochdruckAbgas durch eine Hochdruck-Abgasleitung 18 aus. Die Hochdruck-Abgasleitung 18 mündet dabei in eine Abgasturbine 20 und in der Abgasturbine 20 wird der Druck des Hochdruck-Abgases reduziert und damit die Abgasturbine 20 angetrieben. Das in die Abgasturbine 20 eingeleitete Hochdruck-Abgas strömt dabei als Niederdruck-Abgas durch eine Niederdruck-Abgasleitung 19 aus der Abgasturbine 20 aus und wird anschließend in die Umgebung des Verbrennungsmotors 17 geleitet. Dabei ist in Strömungsrichtung des Niederdruck-Abgases bzw. des Abgases nach der Abgasturbine 20 in die Niederdruck-Abgasleitung 19 ein Partikelfilter 31, insbesondere ein Rußpartikelfilter 31, ausgebildet und ein 2-Wege-Ventil 32 eingebaut. In Strömungsrichtung des Abgases zwischen dem Partikelfilter 31 und dem 2-Wege-Ventil 32 ist eine Niederdruck-Abgasrückführleitung 26 angeschlossen.

Die Abgasturbine 20 treibt mittels einer Welle den als Ladeluftturbine 22 ausgebildeten Ladeluftverdichter 21 an. Abweichend hiervon kann der Ladeluftverdichter 21 auch als Kompressor ausgebildet sein (nicht dargestellt). In die Ladeluftturbine 22 wird durch eine Niederdruck-Ladeluftleitung 24 Niederdruck-Ladeluft bzw. Frischluft aus der Umgebung des Verbrennungsmotors 17 geleitet und in der Ladeluftturbine 22 verdichtet bzw. komprimiert. Dabei wird ein Teil des durch die Niederdruck-Abgasleitung 19 ausströmende Niederdruck-Abgases durch die Niederdruck-Abgasrückführleitung 26 der Niederdruck-Ladeluftleitung 24 zugeführt und damit letztendlich wieder der Ladeluft für den Verbrennungsmotor 17. In die NiederdruckAbgasrückführleitung 26 ist ein zweites Abgassteuerorgan 30 als 2-Wege-Ventil und ein Abgaswärmeübertrager 28 angeordnet. Mittels des zweiten Abgassteuerorgans 30 kann die durch die Niederdruck-Abgasrückführleitung 26 geleitete Menge an Niederdruck-Abgas pro Zeiteinheit gesteuert und/oder geregelt werden. In dem Abgaswärmeübertrager 28 wird das Niederdruck-Abgas vor der Zuführung in der Niederdruck-Ladeluftleitung 24 gekühlt. Dabei wird der Abgaswärmeübertrager 28 vorzugsweise von einem nicht dargestellten Kühlmittelkreis des Verbrennungsmotors 17 durchströmt, so dass die Wärme von dem Niederdruck-Abgas auf das Kühlmittel des Verbrennungsmotors 17 abgegeben wird.

Die von der Ladeluftturbine 22 komprimierte Ladeluft strömt durch die Hochdruck-Ladeluftleitung 23 zu dem Verbrennungsmotor 17. Durch das Verdichten der Ladeluft wird diese erwärmt und in einem in die HochdruckLadeluftleitung 23 eingebauten Ladeluftwärmeübertrager 27 wird die Hochdruck-Ladeluft vor der Zuführung in den Verbrennungsmotor 17 gekühlt. Dabei wird der Ladeluftwärmeübertrager 27 von Umgebungsluft durchströmt, so dass die Wärme von der Hochdruck-Ladeluft in dem Ladeluftwärmeübertrager 27 an die Umgebungsluft abgegeben wird. An der Hochdruck-Abgasleitung 18 in Strömungsrichtung des Hochdruck-Abgases zwischen dem Verbrennungsmotor 17 und der Abgasturbine 20 wird von einer Hochdruck-Abgasrückführleitung 25 Hochdruck-Abgas entnommen und der Hochdruck-Ladeluftleitung 23 in Strömungsrichtung der Ladeluft nach dem Ladeluftwärmeübertrager 27 und vor dem Verbrennungsmotor 17 zugeführt. In die Hochdruck-Abgasrückführleitung 25 ist ein erstes Abgassteuerorgan 29 als 2-Wege-Ventil eingebaut zur Steuerung und/oder Regelung der durch die Hochdruck-Abgasrückführleitung 25 leitbaren Menge an Hochdruck-Abgas pro Zeiteinheit in analoger Weis zu dem zweiten Abgassteuerorgan 20 in der Niederdruck-Abgasrückführleitung 26.

Die Hochdruck-Abgasrückführleitung 25 dient somit zur Hochdruck-Abgasrückführung und die Niederdruck-Abgasrückführleitung 26 dient zur Niederdruck-Abgasrückführung. Zur Erhöhung der durch die NiederdruckAbgasrückführleitung 26 geleiteten Menge an Niederdruck-Abgas kann mittels des 2-Wege-Ventils 32 in der Niederdruck-Abgasleitung 19 die. Niederdruck-Abgasleitung 19 wenigstens teilweise verschlossen werden, so dass mehr Niederdruck-Abgas durch die Niederdruck-Abgasrückführleitung 26 zu der Niederdruck-Ladeluftleitung 24 strömt. In nachteiliger Weise weist somit die aus dem Stand der Technik bekannte Anordnung 16 zwei separate erste und zwei Abgassteuerorgane 29, 30, jeweils als 2-Wege-Ventile, auf, die jeweils auch einen Aktuator, beispielsweise einen Elektromotor, aufweisen. Damit müssen bei der Herstellung der Anordnung 16 bzw des Verbrennungsmotors 17 mit der Anordnung 16 die beiden Abgassteuerorgane 29, 30 separat montiert und an das elektrische Bordnetz angeschlossen werden. Ferner sind in aufwendiger Weise zwei getrennte Abgassteuerorgane 29, 30 herzustellen. Dies ist mit hohen Kosten verbunden.

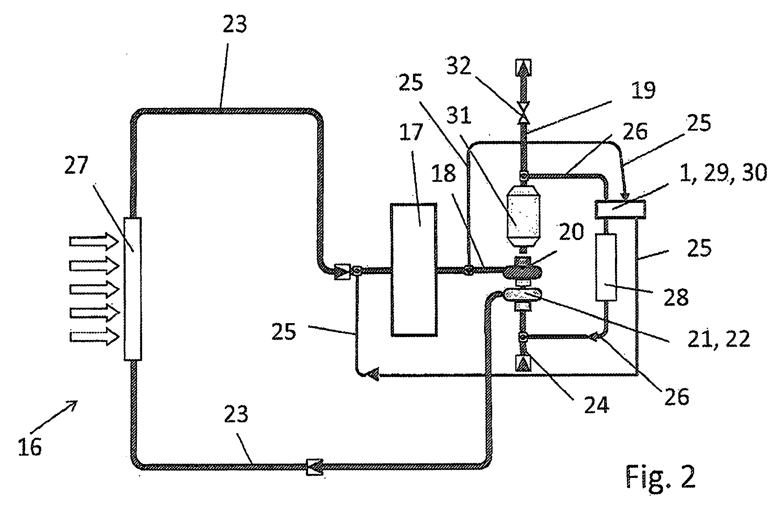

In Fig. 2 ist eine erfindungsgemäße Anordnung 16 zur Rückführung und Kühlung von Abgas des Verbrennungsmotors 17 dargestellt. Im Nachfolgenden werden im Wesentlichen nur die Unterschiede zu der in Fig. 1 dargestellten und aus dem Stand der Technik bekannten Anordnung 16 zur Rückführung und Kühlung von Abgas des Verbrennungsmotors 17 beschrieben. Das erste und zweite Abgassteuerorgan 29, 30 sind durch nur ein einziges MTC-Ventil 1 als eine einzige Baueinheit ersetzt. Hierzu weist die Hochdruck-Abgasrückführleitung 25 lediglich eine geringfügige andere Leitungsführung auf als bei der Anordnung 16 im Stand der Technik gemäß Fig. 1. Mittels des MTC-Ventils 1 kann die Hochdruck-Abgasrückführleitung 25 geöffnet und die Niederdruck-Abgasrückführleitung 26 vollständig geschlossen werden, so dass ausschließlich durch die Hochdruck-Abgasrückführleitung 25 das rückgeführte Abgas strömt. Es befindet sich somit nur die HochdruckAbgasrückführung in Betrieb und dies wird im Allgemeinen für einen Wärmlauf des Verbrennungsmotors 17 und für eine schnelle Ausregelung transienter Betriebszustände benötigt. Außerdem kann mit dem MTC-Ventil 1 die Hochdruck-Abgasrückführleitung 25 vollständig geschlossen und die Niederdruck-Abgasrückführleitung 26 geöffnet werden. Damit befindet sich an der Anordnung 16 nur die Niederdruck-Abgasrückführung 26 in Betrieb. Dieser Betriebszustand der ausschließlichen Niederdruck-Abgasrückführung wird für den regulären bzw. normalen Betrieb des Verbrennungsmotors 17 nach dem Erreichen der normalen Motortemperatur und in regulären Lastzuständen benötigt.

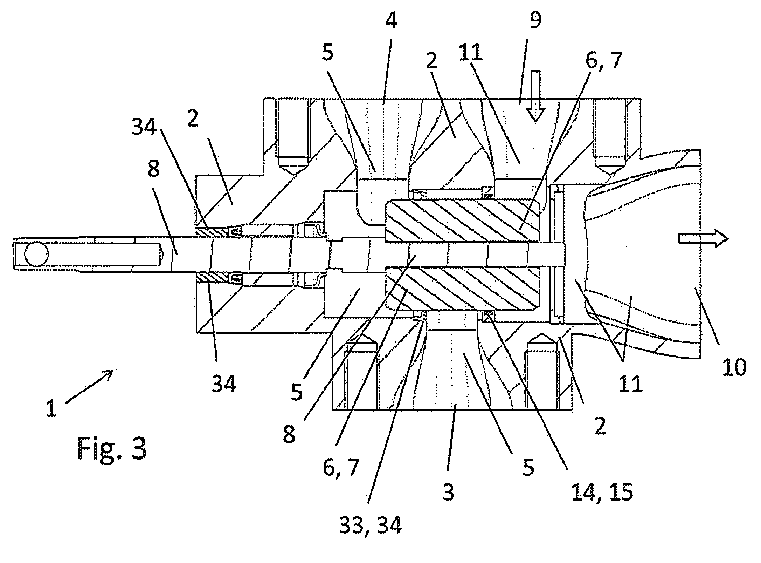

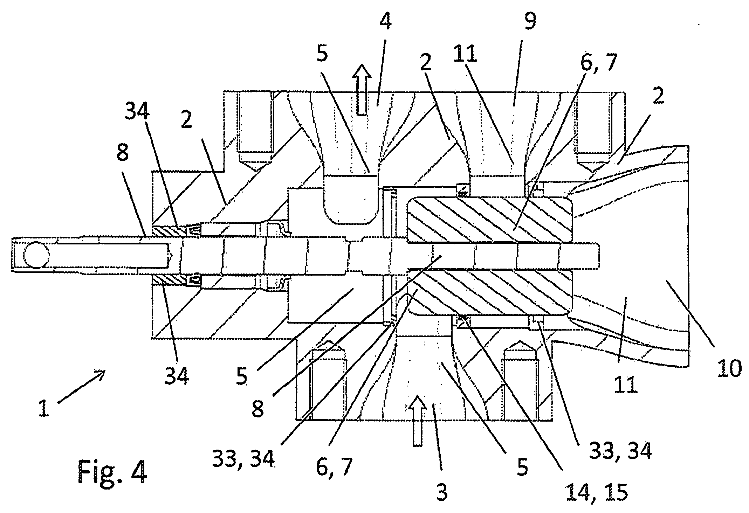

In Fig. 3 und 4 ist ein erstes Ausführungsbeispiel des MTC-Ventils 1 in seiner konstruktiven Auslegung dargestellt. Das MTC-Ventil 1 weist ein Gehäuse 2 mit einer Hochdruck-Einlassöffnung 3 und einer Hochdruck-Austassöffnung 4 auf. Dabei verbindet ein erster Strömungskanal für Hochdruck-Abgas die Hochdruck-Einlassöffnung 3 mit der Hochdruck-Auslassöffnung 4. Außerdem sind an dem Gehäuse 2 eine Niederdruck-Einlassöffnung 9 und eine Niederdruck-Auslassöffnung 10 ausgebildet. Dabei ist die Niederdruck-Einlassöffnung 9 fluidleitend durch einen zweite Strömungskanal 11 für Niederdruck-Abgas mit der Niederdruck-Auslassöffnung 10 verbunden. Innerhalb des Gehäuses 2 ist ein als Kolben 7 ausgebildeter Ventilkörper 6 angeordnet. Zentrisch in dem Kolben 7 ist eine Schubstange 8 angeordnet, welche mit dem Kolben 7 verbunden ist. Die Schubstange 8 ist dabei durch eine in dem Gehäuse 2 angeordnete Bohrung nach außerhalb des Gehäuses 2 geführt und mittels einer Gleitlagerung 34 an dem Gehäuse 2 gelagert. Ein als Teflondichtrichtung 15 ausgebildeter Dichtring 14 dichtet den ersten Strömungskanal 5 für das Hochdruck-Abgas von dem zweiten Strömungskänal 11 für das Niederdruck-Abgas ab.

Außerhalb des Gehäuses 2 ist ein nicht dargestellter Aktuator zum Bewegen des Kolbens 7 angeordnet. Der Aktuator ist dabei beispielsweise ein Elektromotor, vorzugweise mit einem Getriebe, und mittels des Elektromotors kann die Schubstange 8 bewegt werden, so dass sich damit auch der Kolben 7 innerhalb des Gehäuses 2 mitbewegt aufgrund der Verbindung der Schubstange 8 mit dem Kolben 7. Der Kolben 7 ist dabei aufgrund der Gleltlagerung 34 als Kolbenführung 33 dahingehend gelagert, dass von dem Kolben 7 ausschließlich eine Translationsbewegung ausgeführt werden kann.

In Fig. 3 befindet sich der Kolben 7 in einer ersten Stellung, so dass der erste Strömungskanal 5 geschlossen und der zweite Strömungskanal 11 geöffnet ist. Bei einer Anordnung des MTC-Ventils 1 in der Anordnung 16 ist dabei die Hochdruck-Abgasrückführfeltung 25 jeweils an die Hochdruck-Einlass- und Auslassöffnung 3, 4 angeschlossen und die NiederdruckAbgasrückführleitung 26 an die Niederdruck-Einlass- und Auslassöffnung 9, 10. In der in Fig. 3 dargestellten ersten Stellung des Kolbens 7 strömt somit nur durch die Niederdruck-Abgasrückführleitung 26 Niederdruck-Abgas und durch die Hochdruck-Abgasrückführleitung 25 strömt kein Abgas, so dass bei der Anordnung 16 in dieser ersten Stellung des Kolbens 7 lediglich die Niederdruck-Abgasrückführung in Betrieb ist. Mittels einer Bewegung des Kolbens 7 von der in Fig. 3 dargestellten ersten Stellung nach rechts mittels des Elektromotors in die in Fig. 4 dargestellte zweite Stellung des Kolbens 7 wird der zweite Strömungskanal 11 verschlossen und der erste Strömungskanal 5 geöffnef. Damit strömt das Hochdruck-Abgas in die Hochdruck-Einlassöffnung 3 ein, anschließend durch den ersten Strömungskanal 5 und dann aus der Hochdruck-Auslassöffnung 4 aus. Bei der Anordnung des MTC-Ventils 1 in der Anordnung 16 befindet sich somit lediglich die Hochdruck-Abgasrückführung in Betrieb.

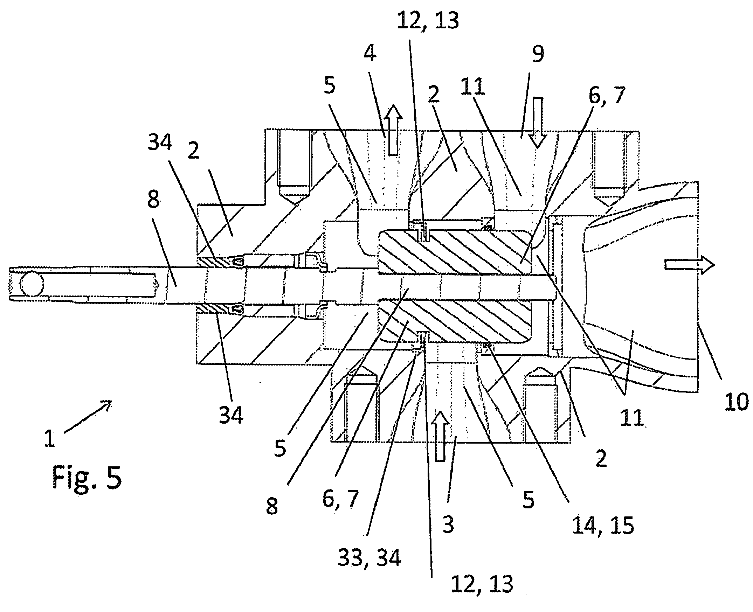

In Fig. 5 ist ein zweites. Ausführungsbeispiel des MTC-Ventils 1 dargestellt. Im Nachfolgenden werden im Wesentlichen nur die Unterschiede zu dem ersten Ausführungsbeispiel des MTC-Ventils 1 gemäß Fig. 3 und 4 beschrieben. Der Kolben 7 des MTC-Ventils 1 ist mit einer als Ringnut 13 ausgebildeten Aussparung 12 versehen. In der in Fig. 5 dargestellten dritten Stellung des Kolbens 7 ist der zweite Strömungskanal 11 geöffnet in analoger Weise zu der ersten Stellung des Ventilkörpers 6 in dem ersten Ausführungsbeispiel gemäß Fig. 3, weil von dem Ventilkörper 6 der zweite Strömungskanal 11 geöffnet ist. Der Ventilkörper 6 ist mittels der Gleitlagerung 34 an dem Gehäuse 2 gelagert. Dies gilt sowohl für das erste als auch für das zweite Ausführungsbeispiel. Dabei ist in der in Fig. 5 dargestellten dritten Stellung des Kolbens 7 die Ringnut 13 dahingehend zu der Gleitlagerung 34 ausgerichtet, dass das Hochdruck-Abgas durch die Ringnut 13 an der Gleitlagerung 34 vorbei und durch einen Spalt zwischen dem Kolben 7 und dem Gehäuse 2 außerhalb der Gleitlagerung 34 strömen kann, so dass in der in Fig. 5 dargestellten dritten Stellung des Kolbens 7 auch der erste Strömungskanal 5 geöffnet ist. Damit kann sowohl durch den ersten Strömungskanal 5 Hochdruck-Abgas als auch durch den zweiten Strömungskanal 11 Niederdruck-Abgas durch das MTC-Ventil 1 strömen. Bei der Anordnung des MTC-Ventils 1 gemäß dem zweiten Ausführungsbeispiel in der dritten Stellung des Kolbens 7 befindet somit bei der Anordnung 16 sowohl die Hochdruck-Abgasrückführung als auch die Niederdruck-Abgasrückführung in Betrieb. Ein derartiger simultaner Betrieb sowohl der HochdruckAbgasrückführung als auch der Niederdruck-Abgasrückführung ist bei speziellen Betriebszuständen des Verbrennungsmotors 17 erforderlich.

Das MTC-Ventil 1 weist nur eine, nicht dargestellte Steckverbindereinheit auf zum Anschluss an eine nicht dargestellte Gegensteckverbindereinheit eines Bordnetzes eines Kraftfahrzeuges (nicht dargestellt). Die Steckverbindereinheit ist vorzugsweise mit mehreren, beispielsweise zwei oder drei, elektrischen Köntaktelementen ausgebildet. Bei der Montage des MTC-Ventils 1 an der Anordnung 16 braucht somit nur ein elektrischer Gegensteckverbinder in den Steckverbinder des MTC-Ventils 1 eingeschoben werden, so dass damit sowohl die Hochdruck-Abgasrückführung als auch die NiederdruckAbgasrückführung mit dem MTC-Ventil 1 in nur einer Baueinheit gesteuert und/oder geregelt werden kann von einer nicht dargestellten Steuerungseinheit der Anordnung 16 oder des Verbrennungsmotors 17.

Insgesamt betrachtet sind mit dem erfindungsgemäßen MTC-Ventil 1 und der erfindungsgemäßen Anordnung 16 zur Rückführung und Kühlung von Abgas wesentliche Vorteile verbunden. Bei der Anordnung 16 wird nur ein MTC-Ventil 1 als Baueinheit zur Steuerung und/oder Regelung der durch die Hochdruck-Abgasrückführleitung 25 leitbare Menge an Hochdruck-Abgas pro Zeiteinheit und der durch die Niederdrtick-Abgasrückführleitung 26 leitbaren Menge an Niederdruck-Abgas pro Zeiteinheit benötigt. Damit kann auf zwei separate 2-Wege-Ventil jeweils mit einem Aktuator, an der Hochdruck-Abgasrückführleitung 25 und der Niederdruck-Abgasrückführleitung 26, verzichtet werden.

### Bexugszeichenliste

- 1: MTC-Ventil
- 2: Gehäuse
- 3: Hochdruck-Einlassöffnung
- 4: Hochdruck-Auslassöffnung
- 5: Erster Strömungskanal
- 6: Ventilkörper
- 7: Kolben
- 8: Schubstange
- 9: Niederdruck-Einlassöffnung
- 10: Niederdruck-Auslassöffnung
- 11: Zweiter Strömungskanal
- 12: Aussparung an Ventilkörper
- 13: Ringnut an Ventilkörper
- 14: Dichtring
- 15: Teflondichtring
- 16: Anordnung zur Rückführung von Abgas
- 17: Verbrennungsmotor
- 18: Hochdruck-Abgasleitung
- 19: Niederdruck-Abgasleitung
- 20: Abgasturbine
- 21: Ladeluftverdichter
- 22: Ladeluftturbine
- 23: Hochdruck-Ladeluftleitung
- 24: Niederdruck-Ladeluftleitung
- 25: Hochdruck-Abgasrückführleitung
- 26: Niederdruck-Abgasrückführleitung
- 27: Ladeluftwärmeübertrager
- 28: Abgaswärmeübertrager
- 29: Erstes Abgassteuerorgan
- 30: Zweites Abgassteerorgan
- 31: Partikelfilter
- 32: 2-Wege-Ventil in Niederdruck-Abgasleitung
- 33: Kolbenführung
- 34: Gleitlagerung

## Patentansprüche

1. MTC-Ventil-Anordnung (16) zur Rückführung von Abgas eines Verbrennungsmotors (17), wobei die MTC-Ventil-Anordnung umfasst:
- ein Gehäuse (2),
- einen Ventilkörper (6),
- eine Hochdruck-Einlassöffnung (3) für Hochdruck-Abgas,
- eine Hochdruck-Auslassöffnung (4) für Hochdruck-Abgas,
- einen ersten Strömungskanal (5) für Hochdruck-Abgas, der die Hochdruck-Einlassöffnung (3) mit der Hochdruck-Auslassöffnung (4) fluidleitend verbindet, wobei
- mittels einer Bewegung des Ventilkörpers (6) die Strömungsquerschnittsfläche des ersten Strömungskanales (5) für das Hochdruck-Abgas veränderbar ist, wobei
das MTC-Ventil (1) eine Niederdruck-Einlassöffnung (9) für Niederdruck-Abgas, eine Niederdruck-Auslassöffnung (10) für Niederdruck-Abgas und einen zweiten Strömungskanal (11) für Niederdruck-Abgas aufweist, der die Niederdruck-Einlassöffnung (9) mit der Niederdruck-Auslassöffnung (10) fluidleitend verbindet, wobei mittels einer Bewegung des Ventilkörpers (6) die Strömungsquerschnittsfläche des zweiten Strömungskanales (11) für das Niederdruck-Abgas veränderbar ist, **dadurch gekennzeichnet, dass** der Ventilkörper (6) ein Kolben (7) ist, der in einer Kolbenführung (33) gelagert ist für eine Translationsbewegung des Kolbens (7), wobei mittels des Ventilkörpers (6) die Strömungsquerschnittsfläche des ersten als auch des zweiten Strömungskanales (5, 11) sowohl für das Hochdruck-Abgas als auch für das Niederdruck-Abgas veränderbar ist, wobei in einer ersten Stellung des wenigstens einen Ventilkörpers (6) der erste Strömungskanal (5) für Hochdruck-Abgas verschlossen ist und der zweite Strömungskanal (11) für Niederdruck-Abgas geöffnet ist, in einer zweiten Stellung des wenigstens einen Ventilkörpers (6) der erste Strömungskanal (5) für Hochdruck-Abgas geöffnet ist und der zweite Strömungskanal (11) für Niederdruck-Abgas verschlossen ist und in einer dritten Stellung des wenigstens einen Ventilkörpers (6) der erste Strömungskanal (5) für Hochdruck-Abgas geöffnet ist und der zweite Strömungskanal (11) für Niederdruck-Abgas geöffnet ist.

2. MTC-Ventil-Anordnung nach Anspruch 1, **dadurch gekennzeichnet, dass** die dritte Stellung des wenigstens einen Ventilkörpers (6) zwischen der ersten und zweiten Stellung des wenigstens einen Ventilkörpers (6) liegt und/oder der wenigstens eine Ventilkörper (6) eine Aussparung (12), insbesondere eine Ringnut (13), aufweist, so dass in der dritten Stellung das Hochdruck-Abgas oder das Niederdruck-Abgas durch die Aussparung (12) leitbar ist.

3. MTC-Ventil-Anordnung nach einem der Ansprüche 1 oder 2, **dadurch gekennzeichnet, dass** der Kolben (7) einen unterschiedlichen Durchmesser aufweist, insbesondere der Kolben (7) an dem zweiten Strömungskanal (11) für Niederdruck-Abgas einen größeren Durchmesser aufweist als an dem ersten Strömungskanal (5) für Hochdruck-Abgas.

4. MTC-Ventil-Anordnung nach einem der vorhergehenden Ansprüche, **dadurch gekennzeichnet, dass** die, insbesondere minimale, Strömungsquerschnittsfläche des zweiten Strömungskanales (11) für Niederdruck-Abgas größer, vorzugsweise um wenigstens 10 %, 20 %, 30 % oder 50 % größer, ist als die, insbesondere minimale, Strömungsquerschnittsfläche des ersten Strömungskanales (5) für Hochdruck-Abgas.

5. MTC-Ventil-Anordnung nach einem der vorhergehenden Ansprüche, **dadurch gekennzeichnet, dass** innerhalb des wenigstens einen Ventilkörpers (6), insbesondere dem Kolben (7), eine Schubstange (8) angeordnet ist und mittels der Schubstange (8) der wenigstens eine Ventilkörper (6) bewegbar ist und/oder das MTC-Ventil (1) einen, insbesondere nur einen, Aktuator, z. B. einen Elektromotor oder ein Piezoelement, aufweist zum Bewegen des wenigstens einen Ventilkörpers (6).

6. MTC-Ventil-Anordnung nach einem der vorhergehenden Ansprüche, **dadurch gekennzeichnet, dass** das MTC-Ventil (1) als eine einzige Baueinheit ausgebildet ist.

7. Anordnung (16) zur Rückführung und vorzugsweise Kühlung von Abgas eines Verbrennungsmotors (17), insbesondere eines Dieselmotors, umfassend
- eine Hochdruck-Abgasleitung (18),
- eine in Strömungsrichtung des Abgases nach der Hochdruck-Abgasleitung (18) angeordnete Abgasturbine (20),
- eine in Strömungsrichtung des Abgases nach der Abgasturbine (20) angeordnete Niederdruck-Abgasleitung (19),
- einen Ladeluftverdichter (21), insbesondere eine Ladeluftturbine (22), vorzugsweise antreibbar von der Abgasturbine (20),
- eine in Strömungsrichtung der Ladeluft nach dem Ladeluftverdichter (21) angeordnete Hochdruck-Ladeluftleitung (23),
- eine in Strömungsrichtung der Ladeluft vor dem Ladeluftverdichter (21) angeordnete Niederdruck-Ladeluftleitung (24),
- eine Hochdruck-Abgasrückführleitung (25) zur Leitung von Hochdruck-Abgas von der Hochdruck-Abgasleitung (18) zu der Hochdruck-Ladeluftleitung (23),
- eine Niederdruck-Abgasrückführleitung (26) zur Leitung von Niederdruck-Abgas von der Niederdruck-Abgasleitung (19) zu der Niederdruck-Ladeluftleitung (24),
- vorzugsweise einen Ladeluftwärmeübertrager (27) zur Kühlung von Ladeluft in der Hochdruck-Ladeluftleitung (23) in Strömungsrichtung der Luft nach dem Ladeluftverdichter (21),
- vorzugsweise einen Abgaswärmeübertrager (28) zur Kühlung von Niederdruck-Abgas in der Niederdruck-Abgasleitung (26),
- ein erstes Abgassteuerorgan (29) zur Steuerung und/oder Regelung der durch die Hochdruck-Abgasrückführleitung (25) leitbaren Menge an Hochdruck-Abgas pro Zeiteinheit,
- ein zweites Abgassteuerorgan (30) zur Steuerung und/oder Regelung der durch die Niederdruck-Abgasrückführleitung (26) leitbaren Menge an Niederdruck-Abgas pro Zeiteinheit,
**dadurch gekennzeichnet, dass**
das erste und zweite Abgassteuerorgan (29, 30) als nur eine MTC-Ventil-Anordnung (1) gemäß einem oder mehreren der vorhergehenden Ansprüche ausgebildet sind.

8. Verbrennungsmotor (17), vorzugsweise Hubkolbenverbrennungskraftmaschine, insbesondere Dieselmotor, für ein Kraftfahrzeug mit einer Anordnung (16) zur Rückführung und vorzugsweise Kühlung von Abgas des Verbrennungsmotors (17), **dadurch gekennzeichnet, dass** die Anordnung (16) gemäß Anspruch 7 ausgebildet ist und eine MTC-Ventil-Anordnung gemäß einem der vorhergehenden Ansprüche 1 bis 6 aufweist.

## Claims

1. A MTC valve arrangement (16) for the recirculation of exhaust gas of an internal combustion engine (17), wherein the MTC valve arrangement comprises:
- a housing (2),
- a valve body (6),
- a high pressure inlet port (3) for high pressure exhaust gas,
- a high pressure outlet port (4) for high pressure exhaust gas,
- a first flow channel (5) for high pressure exhaust gas which connects the high pressure inlet port (3) and the high pressure outlet port (4) in a fluidconducting manner, wherein
the flow cross-sectional area of the first flow channel (5) for the high pressure exhaust gas can be changed by means of a movement of the valve body (6), wherein
the MTC valve (1) has a low pressure inlet port (9) for low pressure exhaust gas, a low pressure outlet port (10) for low pressure exhaust gas and a second flow channel (11) for low pressure exhaust gas which connects the low pressure inlet port (9) and the low pressure outlet port (10) in a fluidconducting manner, wherein the flow cross-sectional area of the second flow channel (11) for the low pressure exhaust gas can be changed by means of a movement of the valve body (6), **characterised in that** the valve body (6) is a piston (7) which is mounted in a piston guide (33) for a translation movement of the piston (7), wherein the flow crosssectional area of the first and of the second flow channel (5, 11) for the high pressure exhaust gas and for the low pressure exhaust gas can be changed by means of the valve body (6), wherein the first flow channel (5) for high pressure exhaust gas is closed and the second flow channel (11) for low pressure exhaust gas is opened in a first position of the at least one valve body (6), the first flow channel (5) for high pressure exhaust gas is opened and the second flow channel (11) for low pressure exhaust gas is closed in a second position of the at least one valve body (6) and the first flow channel (5) for high pressure exhaust gas is opened and the second flow channel (11) for low pressure exhaust gas is opened in a third position of the at least one valve body (6).

2. The MTC valve arrangement according to claim 1, **characterised in that** the third position of the at least one valve body (6) lies between the first and second position of the at least one valve body (6) and/or the at least one valve body (6) has a recess (12), in particular an annular groove (13), so that the high pressure exhaust gas or the low pressure exhaust gas can be guided through the recess (12) in the third position.

3. The MTC valve arrangement according to one of claims 1 or 2, **characterised in that** the piston (7) has a different diameter, the piston (7) in particular has a greater diameter at the second flow channel (11) for low pressure exhaust gas than at the first flow channel (5) for high pressure exhaust gas.

4. The MTC valve arrangement according to one of the preceding claims, **characterised in that** in particular the minimum flow cross-sectional area of the second flow channel (11) for low pressure exhaust gas is greater, preferably by at least 10%, 20%, 30% or 50% greater than in particular the minimum flow crosssectional area of the first flow channel (5) for high pressure exhaust gas.

5. The MTC valve arrangement according to one of the preceding claims, **characterised in that** a push rod (8) is arranged within the at least one valve body (6), in particular the piston (7), and the at least one valve body (6) can be moved by means of the push rod (8) and/or the MTC valve (1) has an actuator, in particular only one, e.g. an electric motor or a piezo element, for moving the at least one valve body (6).

6. The MTC valve arrangement according to one of the preceding claims, **characterised in that** the MTC valve (1) is formed as a single unit.

7. An arrangement (16) for the recirculation and preferably cooling of exhaust gas of an internal combustion engine (17), in particular a diesel engine, comprising
- a high pressure exhaust gas line (18),
- an exhaust gas turbine (20) arranged in the flow direction of the exhaust gas downstream of the high pressure exhaust gas line (18),
- a low pressure exhaust gas line (19) arranged in the flow direction of the exhaust gas downstream of the exhaust gas turbine (20),
- a charge air compressor (21), in particular a charge air turbine (22), preferably drivable by the exhaust gas turbine (20),
- a high pressure charge air line (23) arranged in the flow direction of the charge air downstream of the charge air compressor (21),
- a low pressure charge air line (24) arranged in the flow direction of the charge air upstream of the charge air compressor (21),
- a high pressure exhaust gas recirculation line (25) for guiding high pressure exhaust gas from the high pressure exhaust gas line (18) to the high pressure charge air line (23),
- a low pressure exhaust gas recirculation line (26) for guiding low pressure exhaust gas from the low pressure exhaust gas line (19) to the low pressure charge air line (24),
- preferably a charge air heat exchanger (27) for cooling charge air in the high pressure charge air line (23) in the flow direction of the air downstream of the charge air compressor (21),
- preferably an exhaust gas heat exchanger (28) for cooling low pressure exhaust gas in the low pressure exhaust gas line (26),
- a first exhaust gas control element (29) for controlling and/or regulating the amount of high pressure exhaust gas which can be guided through the high pressure exhaust gas recirculation line (25) per time unit,
- a second exhaust gas control element (30) for controlling and/or regulating the amount of low pressure exhaust gas which can be guided through the low pressure exhaust gas recirculation line (26) per time unit,
**characterised in that**
the first and second exhaust gas control element (29, 30) are formed as only one MTC valve arrangement (1) according to one or more of the preceding claims.

8. An internal combustion engine (17), preferably a piston combustion engine, in particular a diesel engine, for a motor vehicle with an arrangement (16) for the recirculation and preferably cooling of exhaust gas of the internal combustion engine (17), **characterised in that** the arrangement (16) is formed according to claim 7 and has a MTC valve arrangement according to one of the preceding claims 1 to 6.

## Revendications

1. Agencement de soupape MTC (16) servant au recyclage de gaz d'échappement d'un moteur à combustion interne (17), où l'agencement de soupape MTC comprend :
- une cage (2),
- un corps de soupape (6),
- une ouverture d'admission à haute pression (3) pour des gaz d'échappement à haute pression,
- une ouverture d'échappement à haute pression (4) pour des gaz d'échappement à haute pression,
- un premier conduit d'écoulement (5) pour des gaz d'échappement à haute pression, conduit d'écoulement qui relie, en étant fluidiquement conducteur, l'ouverture d'admission à haute pression (3), à l'ouverture d'échappement à haute pression (4), où
la surface de section d'écoulement du premier conduit d'écoulement (5) pour les gaz d'échappement à haute pression est modifiable au moyen d'un mouvement du corps de soupape (6), où la soupape MTC (1) comprend une ouverture d'admission à basse pression (9) pour des gaz d'échappement à basse pression, une ouverture d'échappement à basse pression (10) pour des gaz d'échappement à basse pression et un deuxième conduit d'écoulement (11) pour des gaz d'échappement à basse pression, conduit d'écoulement qui relie, en étant fluidiquement conducteur, l'ouverture d'admission à basse pression (9), à l'ouverture d'échappement à basse pression (10), où la surface de section d'écoulement du deuxième conduit d'écoulement (11) pour les gaz d'échappement à basse pression est modifiable au moyen d'un mouvement du corps de soupape (6), **caractérisé en ce que** le corps de soupape (6) est un piston (7) qui est logé dans un guidage de piston (33) pour un mouvement de translation du piston (7), où la surface de section d'écoulement du premier conduit comme aussi du deuxième conduit d'écoulement (5, 11) est modifiable au moyen du corps de soupape (6), aussi bien pour les gaz d'échappement à haute pression que pour les gaz d'échappement à basse pression, où, dans une première position du corps de soupape (6) au moins au nombre de un, le premier conduit d'écoulement (5) pour des gaz d'échappement à haute pression est fermé et le deuxième conduit d'écoulement (11) pour des gaz d'échappement à basse pression est ouvert, et, dans une deuxième position du corps de soupape (6) au moins au nombre de un, le premier conduit d'écoulement (5) pour des gaz d'échappement à haute pression est ouvert et le deuxième conduit d'écoulement (11) pour des gaz d'échappement à basse pression est fermé, et, dans une troisième position du corps de soupape (6) au moins au nombre de un, le premier conduit d'écoulement (5) pour des gaz d'échappement à haute pression est ouvert et le deuxième conduit d'écoulement (11) pour des gaz d'échappement à basse pression est ouvert.

2. Agencement de soupape MTC selon la revendication 1, **caractérisé en ce que** la troisième position du corps de soupape (6) au moins au nombre de un se situe entre la première position et la deuxième position du corps de soupape (6) au moins au nombre de un et / ou le corps de soupape (6) au moins au nombre de un présente un évidement (12), en particulier une rainure annulaire (13), de sorte que, dans la troisième position, les gaz d'échappement à haute pression ou les gaz d'échappement à basse pression peuvent être guidés à travers l'évidement (12).

3. Agencement de soupape MTC selon l'une des revendications 1 ou 2, **caractérisé en ce que** le piston (7) présente un diamètre variable, en particulier le piston (7) placé sur le deuxième conduit d'écoulement (11) pour des gaz d'échappement à basse pression présente un diamètre plus grand que celui placé sur le premier conduit d'écoulement (5) pour des gaz d'échappement à haute pression.

4. Agencement de soupape MTC selon l'une quelconque des revendications précédentes, **caractérisé en ce que** la surface de section d'écoulement - en particulier minimale - du deuxième conduit d'écoulement (11) pour des gaz d'échappement à basse pression est plus grande, de préférence au moins de 10 %, de 20 %, de 30 % ou de 50 % plus grande que la surface de section - en particulier minimale - du premier conduit d'écoulement (5) pour des gaz d'échappement à haute pression.

5. Agencement de soupape MTC selon l'une quelconque des revendications précédentes, **caractérisé en ce qu'**une tige de poussée (8) est disposée à l'intérieur du corps de soupape (6) au moins au nombre de un, en particulier à l'intérieur du piston (7), et le corps de soupape (6) au moins au nombre de un peut être déplacé au moyen de la tige de poussée (8) et / ou la soupape MTC (1) présente en particulier seulement un actionneur, par exemple un moteur électrique ou un piézo-élément, pour le déplacement du corps de soupape (6) au moins au nombre de un.

6. Agencement de soupape MTC selon l'une quelconque des revendications précédentes, **caractérisé en ce que** la soupape MTC (1) est conçue comme un ensemble unitaire unique.

7. Agencement (16) servant au recyclage et, de préférence, au refroidissement de gaz d'échappement d'un moteur à combustion interne (17), en particulier d'un moteur diesel, comprenant
- une conduite de gaz d'échappement à haute pression (18),
- une turbine à gaz d'échappement (20) disposée, dans la direction d'écoulement des gaz d'échappement, en aval de la conduite de gaz d'échappement à haute pression (18),
- une conduite de gaz d'échappement à basse pression (19) disposée, dans la direction d'écoulement des gaz d'échappement, en aval de la turbine à gaz d'échappement (20),
- un compresseur d'air de suralimentation (21), en particulier une turbine à air de suralimentation (22), de préférence entraînée par la turbine à gaz d'échappement (20),
- une conduite d'air de suralimentation à haute pression (23) disposée, dans la direction d'écoulement de l'air de suralimentation, en aval du compresseur d'air de suralimentation (21),
- une conduite d'air de suralimentation à basse pression (24) disposée, dans la direction d'écoulement de l'air de suralimentation, en amont du compresseur d'air de suralimentation (21),
- une conduite de recyclage des gaz d'échappement à haute pression (25) servant à la direction de gaz d'échappement à haute pression en circulation depuis la conduite de gaz d'échappement à haute pression (18) jusqu'à la conduite d'air de suralimentation à haute pression (23),
- une conduite de recyclage des gaz d'échappement à basse pression (26) servant à la direction de gaz d'échappement à basse pression en circulation depuis la conduite de gaz d'échappement à basse pression (19) jusqu'à la conduite d'air de suralimentation à basse pression (24),
- de préférence un échangeur de chaleur d'air de suralimentation (27) servant au refroidissement d' air de suralimentation dans la conduite d'air de suralimentation à haute pression (23), dans la direction d'écoulement de l'air en aval du compresseur d'air de suralimentation (21),
- de préférence un échangeur de chaleur de gaz d'échappement (28) servant au refroidissement de gaz d'échappement à basse pression dans la conduite de gaz d'échappement à basse pression (26),
- un premier organe de commande de gaz d'échappement (29) servant à la commande et / ou à la régulation à la quantité de gaz d'échappement à haute pression, par unité de temps, pouvant être dirigée à travers la conduite de recyclage des gaz d'échappement à haute pression (25),
- un deuxième organe de commande de gaz d'échappement (30) servant à la commande et / ou à la régulation de la quantité de gaz d'échappement à basse pression, par unité de temps, pouvant être dirigée à travers la conduite de recyclage des gaz d'échappement à basse pression (26),
**caractérisé en ce que**
le premier organe et le deuxième organe de commande de gaz d'échappement (29, 30) sont conçus seulement comme un agencement de soupape MTC (1) selon l'une quelconque ou plusieurs des revendications précédentes.

8. Moteur à combustion interne (17), de préférence moteur à combustion interne à pistons à mouvement alternatif, en particulier moteur diesel, pour un véhicule automobile doté d'un agencement (16) servant au recyclage et, de préférence, au refroidissement de gaz d'échappement du moteur à combustion interne (17), **caractérisé en ce que** l'agencement (16) est configuré selon la revendication 7 et présente un agencement de soupape MTC selon l'une quelconque des revendications précédentes 1 à 6.
